# EUROPEAN PATENT APPLICATION

(11) **EP 4 834 860 A1**
(43) Date of publication of application: **04.11.2026**
(21) Application number: 24912820.8
(22) Date of filing: 24.12.2024
(51) Int. Cl.: C03C 27/12, C08F 16/38, C08K 5/06, C08L 29/14

(54) **a-OLEFIN-MODIFIED POLYVINYL ACETAL RESIN COMPOSITION, INTERLAYER FILM FOR LAMINATED GLASS, AND LAMINATED GLASS**

(30) Priority: 26.12.2023 JP 2023219053
(71) Applicant: Kuraray Co., Ltd., Kurashiki-shi, Okayama 710-0801 (JP)
(72) Inventor: SASAKI, Ryota, Tsukuba-shi Ibaraki 305-0841 (JP); HIRAOKA, Nobutaka, Tsukuba-shi Ibaraki 305-0841 (JP); OKAMOTO, Isamu, Tsukuba-shi Ibaraki 305-0841 (JP); HAERTH, Michael, 53840 Troisdorf (DE)
(74) Representative: Müller-Boré & Partner Patentanwälte PartG mbB
(86) International application number: PCT/JP2024/045707
(87) International publication number: WO 2025/142933

(57) **Abstract**

A problem of the invention is to provide an α-olefin-modified polyvinyl acetal resin composition capable of forming laminated glass having excellent penetration resistance, edge delamination resistance, and heat and moisture resistance. Means for solving the problem is an α-olefin-modified polyvinyl acetal resin composition comprising an α-olefin-modified polyvinyl acetal resin and a compound having a structure in which a hydrocarbon group having 6 or more carbon atoms and a polyoxyalkylene group are bonded.

## Description

### Technical Field

This patent application claims the benefit of Patent Application No.2023-219053, filed in Japan on December 26, 2023, the contents of which are incorporated herein by reference.

The present invention relates to an α-olefin-modified polyvinyl acetal resin composition, and particularly relates to an α-olefin-modified polyvinyl acetal resin composition used as an interlayer of laminated glass.

### Background Art

Laminated glass is a composite glass in which an interlayer for laminated glass consisting of a thermoplastic resin such as polyurethane, an ethylene-vinyl acetate copolymer, and a polyvinyl acetal resin is interposed between a plurality of platelike glass.

Since laminated glass is safe in that glass fragments are less likely to scatter even when it is damaged by an external impact, it is widely used as windshield glass, side glass, rear glass of vehicles such as automobiles, and as window glass of aircraft, buildings, and the like.

Patent Document 1 describes an acetalized product of an ethylene vinyl alcohol copolymer, in which the symmetry coefficient indicating the distribution of the acetalization degree and the melting peak temperature/ midpoint glass transition temperature ratio indicating the degree of crystallization are respectively adjusted to a specific range. It is stated that a resin sheet comprising the acetalized product according to Patent Document 1 is capable of improving self-supporting properties under high-temperature environment and creep resistance while maintaining high transparency and penetration resistance.

Patent Document 1 describes an interlayer for laminated glass consisting of the resin sheet, and a laminated glass using the interlayer. It is stated that a resin sheet using a specific amount of a plasticizer having a specific SP value has excellent bleedout resistance, and that the laminated glass has excellent penetration resistance.

### Background Art Documents

### Patent Documents

Patent Document 1: International Publication No. 2022/220085

### Summary of the Invention

### Problem to be Solved by the Invention

It has been found that when a conventional α-olefin-modified polyvinyl acetal resin composition is used as an interlayer for laminated glass, there is still room for improvement in edge delamination resistance of the laminated glass.

The present invention solves the above-mentioned problems, and an object thereof is to provide an α-olefin-modified polyvinyl acetal resin composition capable of forming laminated glass having excellent penetration resistance, edge delamination resistance, and heat and moisture resistance.

### Means for Solving the Problem

The present invention provides the following aspects.

<Aspect 1> An α-olefin-modified polyvinyl acetal resin composition comprising an α-olefin-modified polyvinyl acetal resin and a compound having a structure in which a hydrocarbon group having 6 or more carbon atoms and a polyoxyalkylene group are bonded.

<Aspect 2> The α-olefin-modified polyvinyl acetal resin composition according to Aspect 1, wherein the compound comprises a polyoxyalkylene alkyl ether in which a hydrocarbon group having 6 or more carbon atoms and a polyoxyalkylene group are bonded by an ether bond.

<Aspect 3> The α-olefin-modified polyvinyl acetal resin composition according to Aspect 1 or 2, wherein the compound is contained in an amount of from 5 to 40 parts by mass, preferably from 10 to 30 parts by mass, and more preferably from 15 to 25 parts by mass with respect to 100 parts by mass of the α-olefin-modified polyvinyl acetal resin.

<Aspect 3-2> The α-olefin-modified polyvinyl acetal resin composition according to Aspect 1 or 2, wherein the compound is contained in an amount of from 8 to 25 parts by mass, preferably from 10 to 22 parts by mass, more preferably from 12 to 19 parts by mass, and even more preferably from 14 to 17 parts by mass with respect to 100 parts by mass of the α-olefin-modified polyvinyl acetal resin.

<Aspect 4> The α-olefin-modified polyvinyl acetal resin composition according to any of Aspects 1 to 3 and Aspect 3-2, wherein the compound has a structure represented by formula

Z-[O-(AO)n-H]x ... (I)

wherein Z is a linear or branched alkyl group having 6 or more carbon atoms, x is an integer of 1 to 12, AO is an oxyalkylene group having 2 to 4 carbon atoms, and n is an integer of 1 to 30.

<Aspect 5> The α-olefin-modified polyvinyl acetal resin composition according to Aspect 4, wherein Z has 6 to 30, preferably 8 to 22, more preferably 10 to 20, and even more preferably 12 to 14 carbon atoms.

<Aspect 6> The α-olefin-modified polyvinyl acetal resin composition according to Aspect 4 or 5, wherein Z comprises a branched alkyl group.

<Aspect 7> The α-olefin-modified polyvinyl acetal resin composition according to any of Aspects 4 to 6, wherein x is an integer of 1 to 6, preferably 1 to 3, and more preferably 1.

<Aspect 8> The α-olefin-modified polyvinyl acetal resin composition according to any of Aspects 4 to 7, wherein AO has 2 carbon atoms.

<Aspect 9> The α-olefin-modified polyvinyl acetal resin composition according to any of Aspects 4 to 8, wherein n is an integer of 1 to 20, preferably 1 to 15, more preferably 2 to 9, and even more preferably 3 to 7.

<Aspect 10> The α-olefin-modified polyvinyl acetal resin composition according to any of Aspects 1 to 9 and Aspect 3-2, wherein the α-olefin comprises ethylene.

<Aspect 11> The α-olefin-modified polyvinyl acetal resin composition according to any of Aspects 1 to 10 and Aspect 3-2, wherein the α-olefin-modified polyvinyl acetal resin comprises 5 to 80 mol%, preferably 20 to 60 mol%, more preferably 25 to 50 mol%, and even more preferably 30 to 46 mol% of α-olefin units.

<Aspect 12> An interlayer for laminated glass comprising the α-olefin-modified polyvinyl acetal resin composition according to any of Aspects 1 to 11 and Aspect 3-2.

<Aspect 13> A laminated glass having a plurality of glass plates and the interlayer for laminated glass according to Aspect 12 arranged between the plurality of glass plates.

### Effects of the Invention

According to the present invention, an α-olefin-modified polyvinyl acetal resin composition capable of forming laminated glass having excellent penetration resistance, edge delamination resistance, and heat and moisture resistance is provided.

### Description of Embodiments

Hereinafter, one embodiment of the present invention will be described in detail, but the scope of the present invention is not limited to the one embodiment described herein, and various modifications may be made without departing from the spirit of the present invention. In addition, when a plurality of upper limits and lower limits are described for a specific parameter, among these upper limits and lower limits, any upper limit and any lower limit may be combined to define a suitable numerical range.

### (α-olefin-modified polyvinyl acetal resin)

The α-olefin-modified polyvinyl acetal resin composition of the present invention comprises an α-olefin-modified polyvinyl acetal resin. An α-olefin-modified polyvinyl acetal resin refers to an acetalized product of an α-olefin-vinyl alcohol copolymer having α-olefin units in a main chain. The α-olefin-modified polyvinyl acetal resin may be obtained, for example, by acetalizing a vinyl alcohol resin copolymerized with an α-olefin (hereinafter referred to as an α-olefin vinyl alcohol copolymer) and an aldehyde in the presence of an acidic catalyst. In the present description, the α-olefin-modified polyvinyl acetal resin composition may be referred to as a "resin composition," and the α-olefin-modified polyvinyl acetal resin may be referred to as a "modified polyvinyl acetal resin."

Examples of the α-olefin vinyl alcohol copolymer include, for example, those obtained by copolymerizing an α-olefin and a vinyl ester-based monomer and saponifying the obtained copolymer. Examples of the α-olefin include, for example, ethylene, propylene, 1-butene, isobutene, 1-pentene, 1-hexene, 4-methyl-1-pentene, vinylcyclohexane, and the like. Among these, preferred α-olefins include ethylene.

As a method for copolymerizing an α-olefin and a vinyl ester-based monomer, conventionally known methods such as a solution polymerization, a bulk polymerization, a suspension polymerization, and an emulsion polymerization may be applied. As a polymerization initiator, depending on the polymerization method, an azo-based initiator, a peroxide-based initiator, a redox-based initiator, and the like are appropriately selected. For the saponification reaction, alcoholysis, hydrolysis, and the like employing conventionally known alkali catalyst or an acid catalyst may be applied, and among these, a saponification reaction employing methanol as a solvent and a caustic soda (NaOH) catalyst is convenient.

The saponification degree of the α-olefin vinyl alcohol copolymer is not particularly limited, but is preferably 95 mol% or more, more preferably 98 mol% or more, even more preferably 99 mol% or more, and most preferably 99.9 mol% or more.

Examples of vinyl ester-based monomers serving as a raw material for the α-olefin vinyl alcohol copolymer include, for example, vinyl formate, vinyl acetate, vinyl propionate, vinyl butyrate, vinyl isobutyrate, vinyl pivalate, vinyl versatate, vinyl caproate, vinyl caprylate, vinyl laurate, vinyl palmitate, vinyl stearate, vinyl oleate, vinyl benzoate, and the like, but especially vinyl acetate is preferred.

The content of α-olefin units in an α-olefin vinyl alcohol copolymer is, for example, from 5 to 80 mol%, preferably from 20 to 60 mol%, more preferably from 25 to 50 mol%, and even more preferably from 30 to 46 mol%. By satisfying this range, α-olefin units of the modified polyvinyl acetal resin described below can be adjusted to a suitable range.

The melt mass flow rate (MFR) of the α-olefin vinyl alcohol copolymer at 190°C under a load of 2.16 kg is, for example, from 0.1 to 50 g/10 min, preferably from 1 to 20 g/10 min, and more preferably from 5 to 10 g/10 min. When the MFR satisfies this range, the MFR of the modified polyvinyl acetal resin and the resin composition described below can be adjusted to a suitable range. It should be noted that the MFR may be measured by a method in accordance with JIS K 7210-1:2014.

The method for producing the modified polyvinyl acetal resin of the present invention is not particularly limited, but it may be produced by a known production method. Examples thereof include a method of adding an aldehyde to an α-olefin vinyl alcohol copolymer solution under acidic conditions to perform an acetalization reaction, or a method of adding an aldehyde to an α-olefin vinyl alcohol copolymer dispersion under acidic conditions to perform an acetalization reaction, and the like.

After neutralizing the reaction product obtained after the acetalization reaction with alkali, the intended modified polyvinyl acetal resin is obtained by washing with water and removing the solvent.

The solvent for producing the modified polyvinyl acetal resin is not particularly limited, but examples thereof include water, alcohols, dimethyl sulfoxide, mixed solvents of water and alcohols, and the like.

The dispersion medium for producing the modified polyvinyl acetal resin is not particularly limited, but examples thereof include water, alcohol, and the like.

The catalyst for the acetalization reaction is not particularly limited, and both an organic acid and an inorganic acid may be used. Examples thereof include acetic acid, paratoluenesulfonic acid, nitric acid, sulfuric acid, hydrochloric acid, carbonic acid, and the like. In particular, inorganic acids such as hydrochloric acid, sulfuric acid, and nitric acid are preferably used since washing after the reaction is easy.

The aldehyde used in the acetalization reaction is not particularly limited, and for example, formaldehyde, acetaldehyde, propionaldehyde, butyraldehyde, hexylaldehyde, benzaldehyde, isobutyraldehyde, 2-ethylhexylaldehyde, 2-methylbutyraldehyde, trimethylacetaldehyde, 2-methylpentylaldehyde, 2,2-dimethylbutyraldehyde, 2-ethylbutyraldehyde, 3,5,5-trimethylhexylaldehyde, 7-octenal, citral, citronellal, acrolein, crotonaldehyde, 2,3,4-trihydroxybenzaldehyde, 3,4,5-trihydroxybenzaldehyde, 2,4,5-trihydroxybenzaldehyde, 2,3-dihydroxybenzaldehyde, 2,4-dihydroxybenzaldehyde, 3,4-dihydroxybenzaldehyde, 3-hydroxybenzaldehyde, 4-hydroxybenzaldehyde, 5-hydroxybenzaldehyde, and the like are used, and in terms of heat resistance and optical characteristics, butyraldehyde, benzaldehyde, and isobutyraldehyde are preferred. In addition, these aldehydes may be used alone or in combination of two or more.

The alkali used for neutralization of the reaction product is not particularly limited, and examples thereof include sodium hydroxide, potassium hydroxide, ammonia, sodium acetate, sodium carbonate, sodium hydrogen carbonate, potassium carbonate, and the like.

The content of α-olefin units in the modified polyvinyl acetal resin of the present invention is, for example, from 5 to 80 mol%, preferably from 20 to 60 mol%, more preferably from 25 to 50 mol%, even more preferably from 30 to 46 mol%, and most preferably from 35 to 42 mol%. When the above ratio of α-olefin units is less than 5 mol%, impact resistance and heat and moisture resistance of the modified polyvinyl acetal resin of the present invention tend to be reduced, and when it exceeds 80 mol%, heat resistance tends to be impaired.

The content of vinyl alcohol units in the modified polyvinyl acetal resin of the present invention is, for example, from 20 to 70 mol%, preferably from 25 to 55 mol%, more preferably from 35 to 45 mol%, and even more preferably from 38 to 43 mol%, with respect to all monomer units constituting the resin. When the ratio of vinyl alcohol units is less than 20 mol%, heat resistance and adhesiveness tend to deteriorate. On the other hand, when the ratio of vinyl alcohol units is 70 mol% or more, colorability tends to deteriorate.

The acetal units of the modified polyvinyl acetal resin of the present invention represent acetalized vinyl alcohol units, and are, for example, from 5 to 50 mol%, preferably from 10 to 35 mol%, more preferably from 15 to 25 mol%, and even more preferably from 18 to 22 mol%. When the acetal units are less than 5 mol%, crystallinity of the modified polyvinyl acetal resin of the present invention could increase, and therefore transparency tends to deteriorate. When the acetal units are 50 mol% or more, heat resistance and glass adhesiveness tend to be impaired.

The MFR of the modified polyvinyl acetal resin of the present invention at 140°C under a load of 21.6 kg is, for example, from 0.1 to 30 g/10 min, preferably from 5 to 25 g/10 min, and more preferably from 10 to 20 g/10 min. When the MFR satisfies this range, the MFR of the resin composition described below can be adjusted to a suitable range.

### (Compound having a structure in which a hydrocarbon group Z having 6 or more carbon atoms and a polyoxyalkylene group are bonded)

The resin composition of the present invention comprises a compound having a structure in which a hydrocarbon group Z having 6 or more carbon atoms and a polyoxyalkylene group are bonded. The polyoxyalkylene group referred to herein has a structure represented by formula -(AO)n-, wherein A is an alkylene group, and n is an integer.

The alkylene A in the polyoxyalkylene group has, for example, from 2 to 4, and preferably 2 carbon atoms. Specific examples of alkylene A include ethylene, propylene, and butylene, and the like. Among these, a preferred alkylene A is ethylene. The average repeating number n of oxyalkylene group AO is, for example, from 1 to 30, preferably from 1 to 20, more preferably from 1 to 15, even more preferably from 2 to 9, and most preferably from 3 to 7. When n is outside the range, balance between hydrophilicity and hydrophobicity becomes poor, and compatibility between polyoxyalkylene alkyl ether and the modified polyvinyl acetal resin tends to be reduced.

A hydrocarbon group is considered to exhibit affinity with poly-α-olefin moieties of the modified polyvinyl acetal resin that have low polarity. A polyoxyalkylene group is considered to exhibit affinity with acetal groups and hydroxyl groups of the modified polyvinyl acetal resin that have high polarity. The compound described above is considered to exhibit excellent compatibility with the modified polyvinyl acetal resin by bonding the hydrocarbon group and the polyoxyalkylene group. A compound having such a structure exhibits a function of plasticizing the modified polyvinyl acetal resin. Therefore, when the modified polyvinyl acetal resin composition comprises the compound described above as a plasticizer, penetration resistance of interlayers for laminated glass and laminated glass is improved.

In one preferred embodiment, the compound described above comprises a polyoxyalkylene alkyl ether in which a hydrocarbon group Z having 6 or more carbon atoms and a polyoxyalkylene group are bonded by an ether bond. That is, the polyoxyalkylene alkyl ether referred to herein has a structure in which an alkylene oxide AO, wherein A is an alkylene group, is added to a monovalent or polyvalent alcohol Z[-OH]x, wherein Z is a hydrocarbon group, and x is the valence of the alcohol.

In such case, the valence x of the alcohol is, for example, from 1 to 12, preferably from 1 to 6, more preferably from 1 to 3, and particularly preferably 1. When x becomes larger, hydrophilicity tends to increase and compatibility with resin tends to be reduced.

The number of carbon atoms in hydrocarbon group Z is 6 or more, preferably from 6 to 30, more preferably from 8 to 22, even more preferably from 10 to 20, and most preferably from 12 to 14. When the number of carbon atoms of Z is within the range, affinity with polyolefin moieties and butyral moieties of the modified polyvinyl acetal resin is further improved. When Z is less than 6, hydrophilicity tends to increase and compatibility with resin tends to be reduced.

Examples of the hydrocarbon group include, for example, aliphatic, aromatic, and alicyclic hydrocarbon groups. The hydrocarbon group may be saturated or unsaturated, but a saturated hydrocarbon group is preferred in terms of discoloration resistance and plasticizing performance. Examples of aliphatic hydrocarbon group include, for example, linear or branched alkyl groups having carbon atoms within the range described above, and the like. A compound consisting of one kind of the structure described above may be used, or two or more kinds thereof may be used in combination.

In one preferred embodiment, the alcohol is a secondary alcohol. In such a case, the hydrocarbon group Z will comprise a branched alkyl group.

In one preferred embodiment, the polyoxyalkylene alkyl ether has a structure represented by the formula (I). The symbols in the formula (I) represent the same meanings as those described herein.

The compound described above is preferably contained in an amount of from 5 to 40 parts by mass with respect to 100 parts by mass of the modified polyvinyl acetal resin. When the content of the compound is less than 5 parts by mass, penetration resistance of laminated glass tends to be reduced, and when the content exceeds 40 parts by mass, edge delamination resistance of laminated glass tends to be reduced and bleedout tends to easily occur. The content of the compound is preferably from 10 to 30 parts by mass, and more preferably from 15 to 25 parts by mass with respect to 100 parts by mass of the modified polyvinyl acetal resin.

In one embodiment, the content of the compound is preferably from 8 to 25 parts by mass, more preferably from 10 to 22 parts by mass, even more preferably from 12 to 19 parts by mass, and particularly preferably from 14 to 17 parts by mass with respect to 100 parts by mass of the α-olefin-modified polyvinyl acetal resin.

Furthermore, in one embodiment, for example, for an application in which penetration resistance is not emphasized, the content of the compound may be 1 part by mass or more and less than 5 parts by mass with respect to 100 parts by mass of the α-olefin-modified polyvinyl acetal resin.

### (Other components)

The resin composition of the present invention may contain other thermoplastic resins in addition to the modified polyvinyl acetal resin and the compound described above. The other thermoplastic resins are not particularly limited, but examples thereof include (meth)acrylic resins, polyvinyl butyral-based resins, ionomer-based resins, and the like.

When the resin composition comprises the other thermoplastic resins, the content thereof is, with respect to the total mass of the resin composition, preferably 20 mass% or less, more preferably 15 mass% or less, and even more preferably 10 mass% or less. When the content of the other thermoplastic resins in the resin composition exceeds 20 mass%, transparency, impact resistance, and adhesiveness to substrates such as glass tend to be easily reduced.

The resin composition of the present invention may further contain additives such as a second plasticizer, an antioxidant, an ultraviolet absorber, an adhesive improver, an antiblocking agent, a silane coupling agent, a pigment, a dye, a functional inorganic compound, and the like, as necessary. In addition, as necessary, the plasticizers and various additives may be extracted or washed to once reduce the contents of these plasticizers and additives, and then the plasticizers, various additives, and the like, may be added again.

When the resin composition comprises the additives, the content thereof is, with respect to the total mass of the resin composition, preferably 20 mass% or less, more preferably 15 mass% or less, even more preferably 10 mass% or less, and most preferably 5 mass% or less. When the content of various additives exceeds 20 mass%, problems such as insufficient self-supporting properties under high-temperature conditions (heat resistance) and bleeding during long-term use as an interlayer for laminated glass tend to easily occur.

In particular, since a second plasticizer has a high effect in reducing self-supporting properties under high-temperature conditions (heat resistance) due to its properties, the content thereof is preferably from 0 to 1 mass%, more preferably from 0 to 0.5 mass%, and even more preferably from 0 to 0.1 mass% with respect to the total mass of the resin composition.

The second plasticizer is not particularly limited, but examples thereof include triethylene glycol-di-2-ethylhexanoate, tetraethylene glycol-di-2-ethylhexanoate, di-(2-butoxyethyl)-adipic acid ester (DBEA), di-(2-butoxyethyl)-sebacic acid ester (DBES), di-(2-butoxyethyl)-azelaic acid ester, di-(2-butoxyethyl)-glutaric acid ester, di-(2-butoxyethoxyethyl)-adipic acid ester (DBEEA), di-(2-butoxyethoxyethyl)-sebacic acid ester (DBEES), di-(2-butoxyethoxyethyl)-azelaic acid ester, di-(2-butoxyethoxyethyl)-glutaric acid ester, di-(2-hexoxyethyl)-adipic acid ester, di-(2-hexoxyethyl)-sebacic acid ester, di-(2-hexoxyethyl)-azelaic acid ester, di-(2-hexoxyethyl)-glutaric acid ester, di-(2-hexoxyethoxyethyl)-adipic acid ester, di-(2-hexoxyethoxyethyl)-sebacic acid ester, di-(2-hexoxyethoxyethyl)-azelaic acid ester, di-(2-hexoxyethoxyethyl)-glutaric acid ester, di-(2-butoxyethyl)-phthalic acid ester and/or di-(2-butoxyethoxyethyl)-phthalic acid ester, and the like. Among these, a plasticizer in which the total number of carbon atoms and oxygen atoms in the molecule is 28 or more is preferred. Examples thereof include triethylene glycol-di-2-ethylhexanoate, tetraethylene glycol-di-2-ethylhexanoate, di-(2-butoxyethoxyethyl)-adipic acid ester, di-(2-butoxyethoxyethyl)-sebacic acid ester, and the like. The above plasticizers may be used alone or in combination of two or more.

In addition, the resin composition may comprise an antioxidant. Examples of antioxidants to be used include, for example, phenolic antioxidants, phosphorus-based antioxidants, and sulfur-based antioxidants, and the like, among which phenolic antioxidants are preferred, and alkyl-substituted phenolic antioxidants are particularly preferred.

Examples of phenolic antioxidants include acrylate-based compounds such as 2-t-butyl-6-(3-t-butyl-2-hydroxy-5-methylbenzyl)-4-methylphenyl acrylate or 2,4-di-t-amyl-6-(1-(3,5-di-t-amyl-2-hydroxyphenyl)ethyl)phenyl acrylate, alkyl-substituted phenolic compounds such as 2,6-di-t-butyl-4-methylphenol, 2,6-di-t-butyl-4-ethylphenol, octadecyl-3-(3,5-)di-t-butyl-4-hydroxyphenyl)propionate, 2,2'-methylene-bis(4-methyl-6-t-butylphenol), 4,4'-butylidene-bis(4-methyl-6-t-butylphenol), 4,4'-butylidene-bis(6-t-butyl-m-cresol), 4,4'-thiobis(3-methyl-6-t-butylphenol), bis(3-cyclohexyl-2-hydroxy-5-methylphenyl)methane, 3,9-bis(2-(3-(3-t-butyl-4-hydroxy-5-methylphenyl)propionyloxy)-1,1-dimethylethyl)-2,4,8,10-tetraoxaspiro[5,5]undecane, 1,1,3-tris(2-methyl-4-hydroxy-5-t-butylphenyl)butane, 1,3,5-trimethyl-2,4,6-tris(3,5-di-t-butyl-4-hydroxybenzyl) benzene, tetrakis(methylene-3-(3',5'-di-t-butyl-4'-hydroxyphenyl)propionate)methane or triethylene glycol bis(3-(3-t-butyl-4-hydroxy-5-methylphenyl)propionate), triazine group-containing phenolic compounds such as 6-(4-hydroxy-3,5-di-t-butylanilino)-2,4-bis-octylthio-1,3,5-triazine, 6-(4-hydroxy-3,5-dimethylanilino)-2,4-bis-octylthio-1,3,5-triazine, 6-(4-hydroxy-3-methyl-5-t-butylanilino)-2,4-bis-octylthio-1,3,5-triazine or 2-octylthio-4,6-bis-(3,5-di-t-butyl-4-oxyanilino)-1,3,5-triazine, and the like.

Examples of phosphorus-based antioxidants include, for example, monophosphite compounds such as triphenyl phosphite, diphenyl isodecyl phosphite, phenyl diisodecyl phosphite, tris(nonylphenyl) phosphite, tris(dinonylphenyl) phosphite, tris(2-t-butyl-4-methylphenyl) phosphite, tris(cyclohexylphenyl) phosphite, 2,2-methylenebis(4,6-dit-butylphenyl)octyl phosphite, 9,10-dihydro-9-oxa-10-phosphaphenanthrene-10-oxide, 10-(3,5-di-t-butyl-4-hydroxybenzyl)-9,10-dihydro-9-oxa-10-phosphaphenanthrene-10-oxide or 10-decyloxy-9,10-dihydro-9-oxa-10-phosphaphenanthrene, diphosphite compounds such as 4,4'-butylidene-bis(3-methyl-6-t-butylphenyl-di-tridecyl phosphite), 4,4'-isopropylidene-bis(phenyl-di-alkyl(C12-C15) phosphite), 4,4'-isopropylidene-bis(diphenylmonoalkyl(C12-C15) phosphite), 1,1,3-tris(2-methyl-4-di-tridecyl phosphite-5-t-butylphenyl)butane or tetrakis(2,4-di-t-butylphenyl)-4,4'-biphenylene phosphite, and the like. Among these, monophosphite compounds are preferred.

Examples of sulfur-based antioxidants include, for example, dilauryl 3,3'-thiodipropionate, distearyl 3,3'-thiodipropionate, lauryl stearyl 3,3'-thiodipropionate, pentaerythritol-tetrakis-(β-lauryl-thiopropionate), 3,9-bis(2-dodecylthioethyl)-2,4,8,10-tetraoxaspiro[5,5]undecane, and the like.

These antioxidants may be used alone or in combination of two or more. The blending amount of the antioxidant is preferably from 0.001 to 5 parts by mass, and more preferably from 0.01 to 1 part by mass with respect to 100 parts by mass of the modified polyvinyl acetal resin. These antioxidants may be added when producing the modified polyvinyl acetal resin of the present invention. Alternatively, as another adding method, the antioxidants may be added to the resin composition when molding the resin sheet of the present invention.

The resin composition may also comprise an ultraviolet absorber. Examples of ultraviolet absorbers to be used include benzotriazole-based ultraviolet absorbers such as 2-(5-methyl-2-hydroxyphenyl)benzotriazole, 2-[2-hydroxy-3,5-bis(α,α' dimethylbenzyl)phenyl]-2H-benzotriazole, 2-(3,5-di-t-butyl-2-hydroxyphenyl)benzotriazole, 2-(3-t-butyl-5-methyl-2-hydroxyphenyl)-5-chlorobenzotriazole, 2-(3,5-di-t-butyl-5-methyl-2-hydroxyphenyl)-5-chlorobenzotriazole, 2-(3,5-di-t-amyl-2-hydroxyphenyl)benzotriazole or 2-(2'-hydroxy-5'-t-octylphenyl)benzotriazole, hindered amine-based ultraviolet absorbers such as 2,2,6,6-tetramethyl-4-piperidyl benzoate, bis(2,2,6,6-tetramethyl-4-piperidyl) sebacate, bis(1,2,2,6,6-pentamethyl-4-piperidyl)-2-(3,5-dit-butyl-4-hydroxybenzyl)-2-n-butylmalonate or 4-(3-(3,5-dit-butyl-4-hydroxyphenyl)propionyloxy)-1-(2-(3-(3,5-di-t-butyl-4-hydroxyphenyl)propionyloxy)ethyl)-2,2,6,6-tetramethylpiperidine, benzoate-based ultraviolet absorbers such as 2,4-di-t-butylphenyl-3,5-di-t-butyl-4-hydroxybenzoate or hexadecyl-3,5-di-t-butyl-4-hydroxybenzoate, and the like. The addition amount of these ultraviolet absorbers is preferably 10 to 50,000 ppm, and more preferably in an amount of100 to 10,000 ppm, on a mass basis with respect to the modified polyvinyl acetal resin. In addition, these ultraviolet absorbers may be used alone or in combination of two or more. These ultraviolet absorbers may be added when producing the modified polyvinyl acetal resin of the present invention. Alternatively, as another adding method, the ultraviolet absorbers may be added to the resin composition when molding the resin sheet of the present invention.

The resin composition may also comprise an adhesive improver. As the adhesive improvers to be used, for example, those disclosed in WO03/033583A1 may be used, and alkali metal salts and/or alkaline earth metal salts of organic acids are preferably used, among which potassium acetate and/or magnesium acetate and the like are preferred. In addition, other additives such as silane coupling agents may also be added. The optimal addition amount of adhesive improver varies depending on the additive used and the place where the obtained module or laminated glass are used, but it is generally preferable to adjust the adhesive force of the obtained sheet to glass to 3 to 10 in the Pummel test (Pummeltest; described in WO03/033583A1 and the like). It is preferably adjusted to 3 to 6 especially when high penetration resistance is required, and to 7 to 10 when high anti-glass scattering property is required. When high anti-glass scattering property is required, it is also a useful method not to add an adhesive improver.

Examples of the silane coupling agents include, for example, 3-glycidoxypropyltrimethoxysilane, 3-glycidoxypropyldiethoxysilane, N-(2-aminoethyl)-3-aminopropyltrimethoxysilane, N-(2-aminoethyl)-3-aminopropyldiethoxysilane, N-(2-aminoethyl)-3-aminopropyldiethoxysilane, and the like.

These silane coupling agents may be used alone or in combination of two or more. The blending amount of the silane coupling agent is preferably from 0.001 to 5 parts by mass, and more preferably from 0.01 to 1 part by mass with respect to 100 parts by mass of the modified polyvinyl acetal resin. These silane coupling agents may be added when producing the modified polyvinyl acetal resin of the present invention. Alternatively, as another adding method, the silane coupling agents may be added to the resin composition when molding the resin sheet of the present invention.

### (Resin composition)

The resin composition of the present invention may be produced by appropriately selecting the above components and mixing the above components by a commonly used method known per se.

The MFR of the resin composition at 140°C under a load of 21.6 kg is, for example, from 1 to 50 g/10 min, preferably from 3 to 30 g/10 min, and more preferably from 10 to 20 g/10 min. When the MFR is less than 1 g/10 min, sufficient processibility (fluidity) cannot be obtained within the appropriate molding temperature range during molding processing, so the molding temperature needs to be increased, and as a result, the obtained molded article tends to be easily discolored. When the MFR exceeds 50 g/10 min, sufficient melt tension cannot be obtained within the appropriate molding temperature range during molding processing, and problems such as deterioration of film-forming stability or surface appearance of the molded article tend to easily occur.

The applications of the resin composition of the present invention are not particularly limited, and for example, it may be used in various fields as a packaging material. Such packaging materials may be used, for example, as containers having excellent oxygen barrier property in the form of bags, tubes, cups, pouches, and the like, for applications such as food, cosmetics, pharmaceuticals, toiletries, vacuum insulation boards, and the like, or as gas barrier films for applications such as food packaging, gasoline tanks, vacuum insulation boards, heat pipes, and the like. In addition, the resin composition of the present invention is also useful as paper processing agents such as a fiber adhesive, fiber treatment agent, fiber processing agent, sizing agent for fiber products, clear coating agent for paper, pigment coating agent for paper, internal sizing agent for paper, binder for thermal paper overcoat, and the like, pressure-sensitive adhesives, anti-fogging agents, paints, dispersants for organic and inorganic pigments, polymerization dispersion stabilizers for emulsions, polymerization dispersion stabilizers for polyvinyl chloride, adhesives for paper, wood, and plastics, and the like, binders for nonwoven fabrics, binders for fibers, binders for ceramics, binders for electrodes, binders for various building materials such as gypsum board and fiberboard, and the like, additives for cement and mortar, hot melt adhesives, interlayer adhesives, resins for 3D printers, and the like. In addition, since the resin composition of the present invention has high transparency, it is also useful as an interlayer for laminated glass, a protective film for glass surfaces, and various transparent containers for cosmetic applications, and the like.

### (Resin sheet)

The method for producing the resin sheet of the present invention is not particularly limited, and conventionally known methods may be used. Specifically, the resin composition may be molded into a sheet by extrusion molding or press molding, blow molding, injection molding, solution casting method, and the like. In particular, a method is preferred in which the resin composition and additives are fed to an extruder, kneaded, melted, discharged from a die, and taken up by a take-up machine to be formed into a plate. The resin temperature during extrusion is preferably from 130 to 230°C, more preferably from 140 to 220°C, and even more preferably from 150 to 200°C. When the resin temperature is too high, decomposition of the modified polyvinyl acetal resin occurs, and the content of volatile substances increases. Conversely, when the temperature is too low, the content of volatile substances also increases. In order to efficiently remove volatile substances, it is preferable to remove volatile substances by reducing the pressure through the vent port of the extruder.

It is preferable to create irregularities on the surface of the resin sheet to prevent the sheets from sticking together and to improve degassing property during lamination process. As methods for creating irregularities, conventionally known methods may be used, and examples thereof include, for example, a method of creating a melt fracture structure by adjusting the extrusion conditions, a method of creating an embossed structure on the extruded sheet, and the like. The depth and shape of the embossing may be those conventionally known.

The thickness of the resin sheet is not particularly limited, but is preferably from 0.10 to 3.0 mm, more preferably from 0.40 to 2.8 mm, and even more preferably from 0.70 to 2.6 mm. When the resin sheet is thinner than 0.10 mm, it tends to be difficult to achieve penetration resistance performance of laminated glass, and when it is thicker than 3.0 mm, it is not preferred since the cost of the sheet itself is high, and the cycle time of the lamination process also tends to be long. The resin sheet may be used as a single molded sheet, or two or more molded sheets may be stacked to adjust the thickness to a desired level.

A resin sheet comprising the resin composition of the present invention has a haze of, for example, 1.1% or less, preferably 0.9% or less, more preferably 0.8% or less, and even more preferably 0.5% or less, at a measurement temperature of 20°C and at a thickness of 0.8 mm. When the haze is within the above range, transparency is further improved. Since transparency of the resin sheet increases as the haze decreases, the lower limit is not particularly limited and may be, for example, 0.01% or more. It should be noted that the haze of the resin sheet is measured in accordance with JIS K7136:2000 using a haze meter.

A resin sheet comprising the resin composition of the present invention has a storage modulus (E') of, for example, from 5 to 100 MPa, preferably from 7 to 50 MPa, and more preferably from 10 to 30 MPa, under the conditions of a measurement temperature of 80°C and a frequency of 1 Hz. When the storage modulus (E') is within the above range, self-supporting properties under high-temperature environment are improved. The storage modulus (E') may be measured by a method in accordance with JIS K 0129:2005. When the storage modulus is less than 5 MPa, creep resistance at high temperature tends to be insufficient. When it is greater than 100 MPa, rigidity of the resin sheet tends to be high, and penetration resistance tends to be insufficient.

For a resin sheet comprising the resin composition of the present invention, the long-term relaxation modulus at 3.2 × 10⁸ seconds (approximately 10 years) after a master curve is prepared at 50°C is preferably 0.5 MPa or more, more preferably 1.0 MPa or more, even more preferably 1.5 MPa or more, and particularly preferably 2.0 MPa or more. The upper limit of the long-term relaxation modulus is not particularly limited, but may be, for example, 20 MPa or less. When the long-term relaxation modulus is within the above range, creep resistance is further improved. The long-term relaxation modulus may be measured by a method described in the Examples. In one embodiment, the long-term relaxation modulus may be, for example, from 1.0 to 20 MPa, preferably from 1.5 to 10 MPa, and more preferably from 2.0 to 5.0 MPa.

### (Interlayer for laminated glass)

The resin sheet of the present invention is useful as an interlayer for laminated glass. The interlayer for laminated glass is particularly preferred as an interlayer of laminated glass for structural material due to its excellent adhesiveness to substrates such as glass, transparency, and self-supporting properties. In addition, it is suitable not only as an interlayer of laminated glass for structural material, but also as an interlayer for laminated glass in various applications such as moving bodies such as automobiles, buildings, and solar cells, but is not limited to these applications.

### (Laminated glass)

Laminated glass may be fabricated by inserting and laminating the resin sheet of the present invention between two or more sheets of glass made of inorganic glass or organic glass. The glass to be laminated with the interlayer for laminated glass of the present invention is not particularly limited, but in addition to inorganic glass such as float glass, tempered glass, wired glass, and heat ray absorbing plate glass, conventionally known organic glass such as polymethyl methacrylate and polycarbonate may be used. The thickness of the glass is not particularly limited, but is preferably from 1 to 10 mm, and more preferably from 2 to 6 mm.

The interlayer used for laminated glass of the present invention may consist of only a layer (x) comprising the above modified polyvinyl acetal resin or a resin composition, or may be a multilayer film comprising at least one layer (x). The multilayer film is not particularly limited, but examples thereof include a two-layer film in which layer (x) and another layer are laminated, a three-layer film in which another layer are arranged between two layers (x), and the like.

Examples of the other layers described above include layers comprising known resins. Examples of such resins include, for example, polyethylene, polypropylene, polyvinyl chloride, polystyrene, polyurethane, polytetrafluoroethylene, acrylic resin, polyamide, polyacetal, polycarbonate, and, among polyesters, polyethylene terephthalate and polybutylene terephthalate, cyclic polyolefin, polyphenylene sulfide, polytetrafluoroethylene, polysulfone, polyethersulfone, polyarylate, liquid crystal polymer, polyimide, and the like may be used. In addition, the other layers may also, as necessary, contain additives such as a plasticizer, an antioxidant, an ultraviolet absorber, a light stabilizer, an antiblocking agent, a pigment, a dye, a heat shielding material (for example, an inorganic heat shielding material or an organic heat shielding material having infrared absorbing capability), a functional inorganic compound, and the like.

As a laminating method for obtaining the above laminated glass, a known method may be adopted, and examples thereof include, a method of using a vacuum laminator, a method of using a vacuum bag, a method of using a vacuum ring, a method of using a nip roll, and the like. In addition, a method of introducing to an autoclave process after temporary bonding may be additionally performed.

When using a nip roll, a method is given as an example in which first temporary bonding is performed at a temperature equal to or lower than the flow initiation temperature of the resin composition, and then temporary bonding is further performed under conditions closer to the flow initiation temperature. Specifically, for example, a method of heating to 30 to 70°C with an infrared heater or the like, and then degassing with a roll, and further heating to 50 to 120°C, followed by pressing with a roll to provide bonding or temporary bonding is illustrated.

Although it depends on the thickness and configuration of the module and laminated glass, the autoclave process additionally performed after temporary bonding may be performed, for example, for approximately 2 hours at a temperature of from 130 to 145°C under a pressure of approximately from 1 to 1.5 MPa.

The laminated glass of the present invention preferably has excellent transparency. For example, when a resin sheet having a thickness of 0.8 mm is used as an interlayer for the laminated glass, and the laminated glass is slowly cooled under conditions described below, the haze is preferably 2% or less, more preferably 1.6% or less, and even more preferably 1.2% or less.

The laminated glass of the present invention preferably has excellent adhesive force to glass. For example, the peel stress in the compression shear strength test carried out by a method described below is preferably from 20 to 40 MPa, more preferably from 22 to 38 MPa, and even more preferably from 24 to 36 MPa. When the peel stress is less than 20 MPa, the adhesive force to glass is insufficient and the glass tends to scatter when the glass breaks, and when it exceeds 40 MPa, the adhesive force to glass is too strong and the penetration resistance when the glass breaks may be reduced.

Since the laminated glass of the present invention has excellent transparency, impact resistance, and heat resistance, it may be suitably used as automobile windshield glass, automobile side glass, automobile sunroofs, automobile rear glass, head-up display glass, laminates for facades, exterior walls, and roofs, building materials such as panels, doors, windows, walls, roofs, sunroofs, soundproof walls, display windows, balconies, handrail walls, and the like, partition glass members for conference rooms, solar panels, and the like.

### Examples

Hereinafter, the present invention will be specifically described with reference to Examples and Comparative Examples, but the present invention is not limited thereto.

### <Example 1>

### (1) Synthesis of Ethylene Modified Polyvinyl Butyral Resin

100 parts by mass of EVOH1 (MFR (190°C, 2.16 kg) 3.5 g/10 min, ethylene unit content 38 mol%, saponification degree 99.98 mol%)), which is an ethylene vinyl alcohol copolymer (hereinafter referred to as "EVOH") synthesized by the method described in Patent No. 7354455, was dispersed in 377 parts by mass of water, and 20.0 parts by mass of isobutyraldehyde was added, and the obtained dispersion was heated to 60°C under stirring. Stirring was continued for 2 hours to impregnate EVOH with isobutyraldehyde. Subsequently, at 60°C, 10 parts by mass of 1 M hydrochloric acid was added to the dispersion to perform the butyralization reaction. Two hours after the first addition of hydrochloric acid, 40 parts by mass of 1 M hydrochloric acid was added, and the butyralization reaction was performed for further 4 hours. The butyralized product produced by butyralization was in a solid state.

Subsequently, the butyralization reaction was stopped by adding 75 parts by mass of 1 M sodium hydroxide to the dispersion to neutralize it. To neutralize the interior of the solid butyralized product, the dispersion was stirred at 60°C for further 8 hours. The neutralized butyralized product was filtered out, and the butyralized product was washed by adding 500 parts by mass of ion-exchanged water to the butyralized product and stirring it at 60°C for 6 hours.

The butyralized product was filtered out, and 500 parts by mass of ion-exchanged water was added to the butyralized product, followed by stirring at 60°C for 6 hours to perform second washing of the butyralized product. The wash water was filtered off, and vacuum drying was performed at 60°C for 8 hours to obtain 113 parts by mass (100% yield) of pelletized ethylene modified polyvinyl butyral resin (PVB1). MFR of the resin (PVB1) was measured under the conditions of 190°C and a load of 2.16 kg using the method described above. The measurement results are shown in Table 1.

### (2) Production of Resin Composition

A polyethylene glycol alkyl ether ("SOFTANOL 30" (trade name) manufactured by Nippon Shokubai Co., Ltd.) in which Z is from 12 to 14, x is 1, AO has 2 carbon atoms, and n is 3 in formula (I) was prepared. 100 parts by mass of the resin (PVB1) and 20 parts by mass of this polyethylene glycol alkyl ether were melt-kneaded for 5 minutes at a chamber temperature of 160°C and a rotation speed of 60 rpm using a Labo Plastomill ("4M150" (trade name) manufactured by Toyo Seiki Seisaku-sho Ltd.), and the contents of the chamber were taken out and cooled to obtain the resin composition. MFR of the obtained resin composition was measured under the conditions of 140°C and a load of 21.6 kg using the method described above. The measurement results are shown in Table 1.

### (3) Production of Resin Sheet

The obtained resin composition was compression-molded for 5 minutes under 180°C heating at a pressure of 50 kgf/cm² (50 MPa) using a release film (UPILEX^{®}-S (manufactured by UBE Corporation)) having a maximum roughness height (Rz) of less than 100 nm, to obtain a resin sheet having a thickness of 0.8 mm. Properties of the obtained resin sheet were measured as follows. The measurement results are shown in Table 1.

### (Haze (Transparency))

A test piece of 20 mm in length × 5 mm in width was cut from the resin sheet to obtain the test piece. Haze of the obtained test piece was measured using a haze meter ("HZ-1" (trade name) manufactured by Suga Test Instruments Co., Ltd.) according to the method described above. A lower haze value indicates that the resin sheet has more excellent transparency. It should be noted that this measurement was carried out while maintaining the temperature of the resin sheet at 20°C.

### (Storage Modulus at 80°C (Self-Supporting Properties under High-Temperature Environment))

A test piece of 20 mm in length × 5 mm in width was cut from the resin sheet, and storage modulus (E') was measured using a dynamic viscoelasticity measuring device (manufactured by UBM Co., Ltd.) under the conditions of a measurement temperature of 80°C and a frequency of 1 Hz. A higher value of the storage modulus indicates that the resin sheet has more excellent self-supporting properties under high-temperature environment.

### (Long-Term Relaxation Modulus (Creep Resistance))

After the resin sheet was left standing for one week or more at 23°C in a 50% RH atmosphere, a test piece of 40 mm in length × 5 mm in width was cut out. Long-term relaxation modulus of the test piece was determined based on a composite curve (master curve) with a reference temperature of 50°C, obtained from dynamic viscoelasticity measurement using a dynamic viscoelasticity measuring device manufactured by UBM Co., Ltd. and the time-temperature conversion rule. This value was used as an indicator of strength of the resin sheet after a long period of time. A higher long-term relaxation modulus indicates higher strength of the resin sheet after a long period of time.

Dynamic viscoelasticity measurements were carried out according to a method in accordance with JIS K 0129:2005, in which tensile measurements were carried out under the conditions of a temperature of from 50 to 100°C and frequencies of 0.1, 0.5, 1, 5, 10, 50, and 100 Hz. From the obtained storage modulus measurement results, a master curve with a reference temperature of 50°C was constructed using the temperature-time conversion rule. Storage modulus (E' (t1)) at a frequency of 4.0 × 10⁻⁷ Hz and loss modulus (E"(t2)) at a frequency of 2.0 × 10⁻⁷ Hz were recorded, the Poisson's ratio was fixed at 0.5, and the long-term relaxation modulus G(t) after 3.2 × 10⁸ seconds at 50°C was determined using the following formula (II).$G \left(t\right) = E ′ \left(t1\right) / 3 - 0.4 \times E " \left(t2\right) / 3$ (II)

It should be noted that this series of calculations were carried out using the calculation software "RheoStation" (trade name, manufactured by UBM Co., Ltd.), which is attached to the dynamic viscoelasticity measuring device manufactured by UBM Co., Ltd.

### (Bleedout Resistance (Compatibility))

The resin sheets were kept at a temperature of 23°C and a relative humidity of 50% for 30 days. Thereafter, visual evaluation was performed to evaluate bleedout resistance of the additives according to the following criteria.

### Evaluation Criteria

A: No bleedout was observed
B: Significant bleedout was observed

### (4) Production of Laminated Glass

The obtained resin sheet was sandwiched between two float glasses having a thickness of 2.7 mm and introduced into a vacuum laminator (1522N manufactured by Nisshinbo Mechatronics Inc.), and the interior of the vacuum laminator was evacuated for 1 minute at 140°C. It was pressed at 30 kPa for 5 minutes while maintaining the evacuated state and temperature to obtain a temporarily bonded body. The obtained temporarily bonded body was introduced into an autoclave and treated for 30 minutes at 140°C and 1.2 MPa to obtain laminated glass. Properties of the obtained laminated glass were measured as follows. The measurement results are shown in Table 1.

### (Edge Delamination Resistance)

After the laminated glass was left standing in an atmosphere of 85°C and 85% RH, the presence or absence of delamination between the interlayer and the glass at the peripheral part (edge) of the laminated glass was visually observed, and edge delamination resistance was evaluated based on the time required for delamination to occur.

### Evaluation Criteria

AA: No delamination for 2000 hours or more
A: Delamination occurs after 1000 hours or more and less than 2000 hours
B: Delamination occurs after 300 hours or more and less than 1000 hours
C: Delamination occurs in less than 300 hours

### (Haze (Transparency))

Haze at the central part of the laminated glass was measured using a haze meter ("HZ-1" (trade name) manufactured by Suga Test Instruments Co., Ltd.) in the same manner as that for the resin sheet. A lower haze value indicates that the laminated glass has more excellent transparency. It should be noted that this measurement was carried out while maintaining the temperature of the laminated glass at 20°C.

### (Edge Whitening Distance)

After the laminated glass was held for 1000 hours under the conditions of a temperature of 85°C and a relative humidity of 85%, whitening state at the edge sides of the laminated glass was visually confirmed, and whitening distance from the edge sides of the laminated glass was measured. A shorter edge whitening distance indicates that the laminated glass has more excellent heat and moisture resistance.

### Evaluation Criteria

A: Edge whitening distance of less than 0.1 mm
B: Edge whitening distance of less than 1 mm
C: Edge whitening distance of 5 mm or more

### (Ball Drop Test (Penetration Resistance))

The edges of the laminated glass were fixed to a support frame and held horizontally, and a 2.26 kg steel ball was then freely dropped from a predetermined height onto the central part of the laminated glass serving as a test piece. The height at which the steel ball did not penetrate in half number of the laminated glass pieces was defined as ball dropping height, and the results were evaluated by the following criteria. A result of AA or A in the ball drop test indicates that the laminated glass has excellent penetration resistance. It should be noted that this test was carried out while maintaining the temperature of the laminated glass at 23°C.

### Evaluation Criteria

AA: 5 m or more
A: 3 m or more and less than 5 m
B: 1.5 m or more and less than 3 m
C: Less than 1.5 m

### <Example 2>

Resin compositions, resin sheets, and laminated glass were produced in the same manner as in Example 1, except that a compound in which n is 5 in formula (I), ("LEOCOL SC-50" (trade name) manufactured by Lion Specialty Chemicals Co., Ltd.) was used as a polyethylene glycol alkyl ether instead of the compound in which n is 3, and properties thereof were tested. The results are shown in Table 1.

### <Example 3>

Resin compositions, resin sheets, and laminated glass were produced in the same manner as in Example 1, except that a compound in which n is 9 in formula (I) ("LEOCOL SC-90" (trade name) manufactured by Lion Specialty Chemicals Co., Ltd.) was used as a polyethylene glycol alkyl ether instead of the compound in which n is 3, and properties thereof were tested. The results are shown in Table 1.

### <Example 4>

An ethylene modified polyvinyl butyral resin (PVB2) was synthesized in the same manner as in Example 1, except that 28.0 parts by mass of isobutyraldehyde were used instead of 20.0 parts by mass of isobutyraldehyde. Characteristic values of the resin (PVB2) are shown in Table 1.

Resin compositions, resin sheets, and laminated glass were produced in the same manner as in Example 1, except that the resin (PVB2) was used instead of the resin (PVB1), and a compound in which n is 5 in formula (I) ("LEOCOL SC-50" manufactured by Lion Specialty Chemicals Co., Ltd.) was used as a polyethylene glycol alkyl ether instead of the compound in which n is 3, and properties thereof were tested. The results are shown in Table 1.

### <Example 5>

An ethylene modified polyvinyl butyral resin (PVB3) was synthesized in the same manner as in Example 1, except that 100 parts by mass of EVOH2 (MFR (190°C, 2.16 kg) 10 g/10 min, ethylene unit content 44 mol%, saponification degree 99.98 mol%) synthesized by the method described in Patent No. 7354455 was used instead of 100 parts by mass of EVOH1 (MFR (190°C, 2.16 kg) 3.5 g/10 min, ethylene unit content 38 mol%, saponification degree 99.98 mol%), and 18.0 parts by mass of isobutyraldehyde was used instead of 20.0 parts by mass of isobutyraldehyde. Characteristic values of the resin (PVB3) are shown in Table 1.

Resin compositions, resin sheets, and laminated glass were produced in the same manner as in Example 1, except that the resin (PVB3) was used instead of the resin (PVB1), and a compound in which n is 5 in formula (I) ("LEOCOL SC-50" manufactured by Lion Specialty Chemicals Co., Ltd.) was used as a polyethylene glycol alkyl ether instead of the compound in which n is 3, and properties thereof were tested. The results are shown in Table 1.

**[Table 1]**

| | | Examples | | | | |
|---|---|---|---|---|---|---|
| | | 1 | 2 | 3 | 4 | 5 |
| | | PVB1 | PVB1 | PVB1 | PVB2 | PVB3 |
| Modified polyvinyl butyral resin | Ethylene units (mol%) | 38 | 38 | 38 | 38 | 44 |
| | Vinyl alcohol units (mol%) | 43 | 43 | 43 | 40 | 39 |
| | Acetal units (mol%) | 19 | 19 | 19 | 22 | 17 |
| | Vinyl acetate units (mol%) | 0 | 0 | 0 | 0 | 0 |
| | MFR (190°C, 2.16kg) | 8 | 8 | 8 | 5 | 4.5 |
| Polyoxyalkylene alkyl ether compound | Molecular structure | EO3 | EO5 | EO9 | EO5 | EO5 |
| | Content (parts by mass) | 20 | 20 | 20 | 20 | 20 |
| Properties of resin composition, resin sheet | MFR (140°C, 21.6kg) | 15 | 13 | 10 | 12 | 20 |
| | Haze (%) | 0.6 | 0.4 | 0.8 | 0.4 | 0.4 |
| | Storage modulus (MPa@80°C) | 15 | 13 | 15 | 8 | 12 |
| | Long-term relaxation modulus (MPa@50°C, 3.2×10⁸ sec) | 3.0 | 3.0 | 3.0 | 2.4 | 2.4 |
| | Bleedout resistance | A | A | A | A | A |
| Properties of laminated glass | Edge delamination resistance | B | AA | A | A | A |
| | Haze(%) | 0.4 | 0.3 | 0.5 | 0.3 | 0.3 |
| | Edge whitening distance | A | A | A | A | A |
| | Ball drop test | A | A | A | A | A |

| | | | | | | |
|---|---|---|---|---|---|---|
| EO3 : in formula (I), Z=12~14, x=1, AO having 2 carbon atoms, n=3 EO5 : in formula (I), Z=12~14, x=1, AO having 2 carbon atoms, n=5 EO9 : in formula (I), Z=12~14, x=1, AO having 2 carbon atoms, n=9 | | | | | | |

### <Comparative Example 1>

A polyvinyl butyral resin (PVB4) was synthesized in the same manner as in Example 1, except that 100 parts by mass of polyvinyl alcohol (MFR (190°C, 2.16 kg) 2 g/10 min, saponification degree 97 mol%) was used instead of 100 parts by mass of EVOH1 (MFR (190°C, 2.16 kg) 3.5 g/10 min, ethylene unit content 38 mol%, saponification degree 99.98 mol%), and 60.0 parts by mass of isobutyraldehyde was used instead of 20.0 parts by mass of isobutyraldehyde. Characteristic values of the resin (PVB4) are shown in Table 2.

Resin compositions, resin sheets, and laminated glass were produced in the same manner as in Example 1, except that the resin (PVB4) was used instead of the resin (PVB1), and a compound in which n is 5 in formula (I) ("LEOCOL SC-50" manufactured by Lion Specialty Chemicals Co., Ltd.) was used as a polyethylene glycol alkyl ether instead of the compound in which n is 3, and properties thereof were tested. The results are shown in Table 2.

### <Comparative Example 2>

An ethylene modified polyvinyl butyral resin (PVB5) was synthesized in the same manner as in Example 1, except that 100 parts by mass of EVOH2 (MFR (190°C, 2.16 kg) 10 g/10 min, ethylene unit content 44 mol%, saponification degree 99.98 mol%) was used instead of 100 parts by mass of EVOH1 (MFR (190°C, 2.16 kg) 3.5 g/10 min, ethylene unit content 38 mol%, saponification degree 99.98 mol%), and 25.0 parts by mass of isobutyraldehyde was used instead of 20.0 parts by mass of isobutyraldehyde. Characteristic values of the resin (PVB5) are shown in Table 2.

Resin compositions, resin sheets, and laminated glass were produced in the same manner as in Example 1, except that the resin (PVB5) was used instead of the resin (PVB1), and the di-(2-butoxyethyl)-adipic acid ester (DBEA, manufactured by Tokyo Chemical Industry Co., Ltd.) was used instead of the polyethylene glycol alkyl ether, and properties thereof were tested. The results are shown in Table 2.

### <Comparative Example 3>

Resin compositions, resin sheets, and laminated glass were produced in the same manner as in Example 1, except that the resin (PVB3) was used instead of the resin (PVB1), and the polypropylene glycol (weight average molecular weight 400, PPG, manufactured by FUJIFILM Wako Pure Chemical Corporation) was used instead of a polyethylene glycol alkyl ether, and properties thereof were tested. The results are shown in Table 2.

### <Comparative Example 4>

Resin compositions, resin sheets, and laminated glass were produced in the same manner as in Example 1, except that the resin (PVB3) was used instead of the resin (PVB1), and the polyethylene glycol alkyl ether was not used, and properties thereof were tested. The results are shown in Table 2.

**[Table 2]**

| | | Comparative Examples | | | |
|---|---|---|---|---|---|
| | | 1 | 2 | 3 | 4 |
| | | PVB4 | PVB5 | PVB3 | PVB3 |
| Modified polyvinyl butyral resin | Ethylene units (mol%) | 0 | 44 | 44 | 44 |
| | Vinyl alcohol units (mol%) | 22 | 32 | 39 | 39 |
| | Acetal units (mol%) | 76 | 24 | 17 | 17 |
| | Vinyl acetate units (mol%) | 2 | 0 | 0 | 0 |
| | MFR (190°C, 2.16kg) | 10 | 5 | 4, 5 | 4.5 |
| Polyoxyalkylene alkyl ether compound or plasticizer | Molecular structure | EO5 | DBEA | PPG | - |
| | Content (parts by mass) | 20 | 20 | 20 | 0 |
| Properties of resin composition, resin sheet | MFR (140°C, 21. 6kg) | 5 | 30 | 25 | 1 |
| | Haze (%) | 0.5 | 0.8 | 0.4 | 1.2 |
| | Storage modulus (MPa@80°C) | 2 | 8 | 8 | 16 |
| | Long-term relaxation modulus (MPa@50°C, 3.2×10⁸ sec) | 0.1 | 1.4 | 2.4 | 3.2 |
| | Bleedout resistance | A | B | A | - |
| Properties of laminated glass | Edge delamination resistance | B | C | C | A |
| | Haze(%) | 0.4 | 0.5 | 0.3 | 0.7 |
| | Edge whitening distance | C | A | A | A |
| | Ball drop test | A | A | B | C |

| | | | | | |
|---|---|---|---|---|---|
| EO3: in formula (I), Z=12~14, x=1, AO having 2 carbon atoms, n=3 EO5: in formula (I), Z=12~14, x=1, AO having 2 carbon atoms, n=5 EO9: in formula (I), Z=12~14, x=1, AO having 2 carbon atoms, n=9 | | | | | |

In Comparative Example 1, the modified polyvinyl acetal resin was not α-olefin-modified, and creep resistance of the resin sheet deteriorated and edge whitening distance of the laminated glass increased. In Comparative Examples 2 and 3, conventionally known plasticizers were used, and edge delamination property deteriorated. In Comparative Example 4, no plasticizer was used, and penetration resistance deteriorated.

### <Example 6>

Resin compositions, resin sheets, and laminated glass were produced in the same manner as in Example 1, except that the addition amount of polyethylene glycol alkyl ether was changed to 15 parts by mass, and the polyethylene glycol alkyl ether was changed to ("TERGITOL 15-S-3" manufactured by Dow Chemical Japan Ltd.), and properties thereof were tested. The results are shown in Table 3.

### <Example 7>

Resin compositions, resin sheets, and laminated glass were produced in the same manner as in Example 2, except that the addition amount of polyethylene glycol alkyl ether was changed to 15 parts by mass, and the polyethylene glycol alkyl ether was changed to ("TERGITOL 15-S-5" manufactured by Dow Chemical Japan Ltd.), and properties thereof were tested. The results are shown in Table 3.

### <Example 8>

Resin compositions, resin sheets, and laminated glass were produced in the same manner as in Example 3, except that the addition amount of polyethylene glycol alkyl ether was changed to 15 parts by mass, and the polyethylene glycol alkyl ether was changed to ("TERGITOL 15-S-9" manufactured by Dow Chemical Japan Ltd.), and properties thereof were tested. The results are shown in Table 3.

### <Example 9>

Resin compositions, resin sheets, and laminated glass were produced in the same manner as in Example 4, except that the addition amount of polyethylene glycol alkyl ether was changed to 15 parts by mass, and the polyethylene glycol alkyl ether was changed to ("TERGITOL 15-S-5" manufactured by Dow Chemical Japan Ltd.), and properties thereof were tested. The results are shown in Table 3.

### <Example 10>

100 parts by mass of EVOH1 was dispersed in 120 parts by mass of water and 195 parts by mass of 1-propanol, and temperature of the solution was raised to 60°C under stirring and dissolved to be homogeneous. After dissolution, 40 parts by mass of 1 M hydrochloric acid were added, and then 16.7 parts by mass of n-butyraldehyde were added and dispersed, followed by the acetalization reaction performed while maintaining the temperature at 60°C. After holding for 4 hours from the start of the reaction, 6.4 parts by mass of sodium carbonate were added to stop the reaction. After 500 parts by mass of 1-propanol was added to the reaction solution and homogenized, the solution was dropped into 2000 parts by mass of water to precipitate the resin. After the filtration, water washing operations were repeated three times, and vacuum drying was performed for 8 hours at 60°C to obtain an ethylene modified polyvinyl butyral resin (PVB6). Characteristic values of the resin (PVB6) are shown in Table 3.

Resin compositions, resin sheets, and laminated glass were produced in the same manner as in Example 1, except that the resin (PVB6) was used instead of the resin (PVB1), the addition amount of polyethylene glycol alkyl ether was changed to 15 parts by mass, and the polyethylene glycol alkyl ether was changed to ("TERGITOL 15-S-5" manufactured by Dow Chemical Japan Ltd.), and properties thereof were tested. The results are shown in Table 3.

**[Table 3]**

| | | Examples | | | | |
|---|---|---|---|---|---|---|
| | | 6 | 7 | 8 | 9 | 10 |
| | | PVB1 | PVB1 | PVB1 | PVB2 | PVB6 |
| Modified polyvinyl butyral resin | Ethylene units (mol%) | 38 | 38 | 38 | 38 | 38 |
| | Vinyl alcohol units (mol%) | 43 | 43 | 43 | 40 | 43 |
| | Acetal units (mol%) | 19 | 19 | 19 | 22 | 19 |
| | Vinyl acetate units (mol%) | 0 | 0 | 0 | 0 | 0 |
| | MFR (190°C, 2.16kg) | 8 | 8 | 8 | 5 | 12 |
| Polyoxyalkylene alkyl ether compound | Molecular structure | EO3 | EO5 | EO9 | EO5 | EO5 |
| | Content (parts by mass) | 15 | 15 | 15 | 15 | 15 |
| Properties of resin composition, resin sheet | MFR (140°C, 21.6kg) | 12 | 11 | 9 | 11 | 31 |
| | Haze (%) | 0.5 | 0.5 | 0.6 | 0.5 | 0.6 |
| | Storage modulus (MPa@80°C) | 17 | 15 | 16 | 12 | 2 |
| | Long-term relaxation modulus (MPa@50°C, 3.2×10⁸ sec) | 3.2 | 3.2 | 3.3 | 2.7 | 0 .2 |
| | Bleedout resistance | A | A | A | A | A |
| Properties of laminated glass | Edge delamination resistance | A | AA | AA | A | A |
| | Haze(%) | 0.4 | 0.6 | 0.4 | 0.4 | 0.5 |
| | Edge whitening distance | A | A | A | A | A |
| | Ball drop test | A | A | B | A | B |

| | | | | | | |
|---|---|---|---|---|---|---|
| FEO3: in formula (I), Z=12~14, x=1, AO having 2 carbon atoms, n=3 EO5: in formula (I), Z=12~14, x=1, AO having 2 carbon atoms, n=5 EO9: in formula (I), Z=12~14, x=1, AO having 2 carbon atoms, n=9 | | | | | | |

## Claims

1. An α-olefin-modified polyvinyl acetal resin composition comprising an α-olefin-modified polyvinyl acetal resin and a compound having a structure in which a hydrocarbon group having 6 or more carbon atoms and a polyoxyalkylene group are bonded.

2. The α-olefin-modified polyvinyl acetal resin composition according to claim 1, wherein the compound comprises a polyoxyalkylene alkyl ether in which a hydrocarbon group having 6 or more carbon atoms and a polyoxyalkylene group are bonded by an ether bond.

3. The α-olefin-modified polyvinyl acetal resin composition according to claim 1, wherein the compound is contained in an amount of from 5 to 40 parts by mass with respect to 100 parts by mass of the α-olefin-modified polyvinyl acetal resin.

4. The α-olefin-modified polyvinyl acetal resin composition according to claim 1, wherein the compound has a structure represented by formula
Z-[O-(AO)n-H]x ... (I)
wherein Z is a linear or branched alkyl group having 6 or more carbon atoms, x is an integer of 1 to 12, AO is an oxyalkylene group having 2 to 4 carbon atoms, and n is an integer of 1 to 30.

5. The α-olefin-modified polyvinyl acetal resin composition according to claim 4, wherein Z has 6 to 30 carbon atoms.

6. The α-olefin-modified polyvinyl acetal resin composition according to claim 4, wherein Z comprises a branched alkyl group.

7. The α-olefin-modified polyvinyl acetal resin composition according to claim 4, wherein x is an integer of 1 to 6.

8. The α-olefin-modified polyvinyl acetal resin composition according to claim 4, wherein AO has 2 carbon atoms.

9. The α-olefin-modified polyvinyl acetal resin composition according to claim 4, wherein n is an integer of 1 to 20.

10. The α-olefin-modified polyvinyl acetal resin composition according to claim 1, wherein the α-olefin comprises ethylene.

11. The α-olefin-modified polyvinyl acetal resin composition according to claim 1, wherein the α-olefin-modified polyvinyl acetal resin comprises 5 to 80 mol% of α-olefin units.

12. An interlayer for laminated glass comprising the α-olefin-modified polyvinyl acetal resin composition according to any one of claims 1 to 11.

13. A laminated glass having a plurality of glass plates and the interlayer for laminated glass according to claim 12 arranged between the plurality of glass plates.
